# FASCICULE DE BREVET EUROPEEN

(11) **EP 2 420 705 B1**
(45) Date de publication et mention de la délivrance du brevet: **26.06.2013**
(21) Numéro de dépôt: 10006706.5
(22) Date de dépôt: 29.06.2010
(51) Int. Cl.: F16H 61/32, F16H 63/34

(54) **Actionneur de boîte de vitesses à arbres secondaires multiples et embrayages multiples**
Schaltaktor für ein Getriebe mit mehrfachen Sekundärwellen und mehrfachen Kupplungen
Actuator for gearbox with multiple secondary shafts and multiple clutches

(43) Date de publication de la demande: 22.02.2012
(73) Titulaire: Valeo Sicherheitssysteme GmbH, 85253 Erdweg (DE)
(72) Inventeur: Winter, Andreas, 85253 Erdweg (DE)
(74) Mandataire: Croonenbroek, Thomas Jakob

(56) Documents cités:
- DE-A1- 19 805 924
- DE-A1-102008 029 264
- DE-A1-102008 035 759
- FR-A1- 2 798 179

## Description

L'invention concerne les boîtes de vitesses automatiques ou motorisées, du type à double-embrayageet en particulié un ensemble pour boîte de vitesses tel que connu de DE 10 2008 029 264, divulguant les caractéristiques du préambule de la revendication 1.

Dans de telles boîtes de vitesses, au moins un arbre primaire entraîne deux arbres secondaires par l'intermédiaire de rapports de vitesses, selon une séquence dans laquelle un seul des deux rapports engagés est embrayé avec l'arbre primaire alors que l'autre rapport n'est pas embrayé mais est déjà engagé. Ainsi, lorsque le rapport en cours de transmission est débrayé, le rapport suivant, déjà engagé, n'a plus qu'à être embrayé, sans perte de temps ni de puissance au passage entre les deux rapports. A cet effet, chacun des deux arbres secondaires est muni d'un embrayage respectif dédié qui provoque l'entraînement de cet arbre secondaire par le rapport qui est engagé lorsque cet embrayage est actionné. Ces embrayages associés aux arbres secondaires sont en pratique réalisés sous la forme d'un organe unique englobant les deux embrayages et appelé à cet effet double-embrayage. Sur un même axe secondaire sont montés plusieurs rapports susceptibles d'être engagés. Typiquement, un des arbres secondaires porte les rapports pairs et l'autre les rapports impairs.

L'actionneur de boîte de vitesses comprend des leviers mobiles qui commandent le choix du rapport de transmission sur l'organe de transmission, par l'intermédiaire des fourches de synchronisation de ce dernier. La fabrication de la boîte de vitesses met en oeuvre une étape d'assemblage de l'actionneur avec ses leviers à l'organe de transmission doté de ses fourches. Au cours de cette étape, les leviers doivent être convenablement reliés aux fourches. Ces pièces se trouvant sur des faces en regard, elles ne sont pas visibles à l'opérateur lors du montage de sorte qu'il n'est pas facile d'assurer leur liaison. Pour faciliter l'assemblage, on peut prévoir d'augmenter les tolérances de fabrication sur certaines parties des leviers et des fourches en vue d'augmenter le jeu de montage. Toutefois, durant l'utilisation, ces fortes tolérances génèrent du bruit et entrainent une usure prématurée des pièces.

Un but de l'invention est de faciliter la fabrication de la boîte de vitesses.

A cet effet, on prévoit selon l'invention un ensemble pour boîte de vitesses à arbres secondaires multiples et embrayages multiples selon la revendication 1.

Ainsi, le verrou permet d'immobiliser les leviers dans la position souhaitée pour l'assemblage en vue de faciliter leur liaison avec les fourches de synchronisation. Une fois les leviers reliés aux fourches, le passage du verrou dans la position où il autorise le mouvement des leviers permet de libérer ces derniers. Et de préférence, on prévoit même que c'est l'organe de transmission qui, lors de son assemblage à l'actionneur, place lui-même le verrou dans la position d'autorisation de sorte que la libération des leviers est automatique une fois ceux-ci reliés aux fourches. On facilite donc la fabrication de la boîte de vitesses sans qu'il faille augmenter les tolérances ni les jeux et sans craindre l'apparition de bruit et d'une usure prématurée.

Avantageusement, le verrou est monté mobile à coulissement par rapport au bâti suivant une direction parallèle à un axe de rotation des leviers.

Ainsi, le verrou peut facilement interdire ou autoriser le mouvement de tous les leviers simultanément.

De préférence, le verrou et les leviers comprennent des reliefs et des cavités aptes à venir en prise mutuelle.

Avantageusement, le verrou comprend un relief accessible depuis l'extérieur de l'actionneur pour faire passer le verrou de la position d'interdiction à la position d'autorisation.

Ainsi, il suffit d'actionner ce relief, par exemple au moyen de l'organe de transmission, pour faire quitter au verrou la position d'interdiction.

De préférence, l'actionneur comprend un ressort de rappel du verrou dans la position d'interdiction.

Ainsi, le verrou maintient les leviers immobiles tant qu'il n'a pas subi une sollicitation tendant à le faire passer en position d'autorisation.

Avantageusement, les fourches comportent un bras de liaison apte à pénétrer dans une ouverture des leviers.

On réalise ainsi de façon simple la liaison des fourches aux leviers.

De préférence, le bras présente une extrémité de forme tronconique.

On facilite ainsi la pénétration des extrémités des fourches dans les leviers et la réalisation de la liaison entre eux.

De préférence, le bras présente une zone de forme cylindrique au-delà de l'extrémité.

Cette forme cylindrique permet d'éviter d'avoir un jeu trop important entre les pièces une fois le montage réalisé.

On prévoit encore selon l'invention une boîte de vitesses à arbres secondaires multiples et embrayages multiples selon la revendication 10.

On prévoit enfin selon l'invention un procédé d'assemblage d'une boîte de vitesses à arbres secondaires multiples et embrayages multiples selon la revendication 11.

D'autres caractéristiques et avantages de l'invention apparaîtront encore dans la description suivante d'un mode de réalisation donné à titre d'exemple non limitatif en référence aux dessins annexés sur lesquels :
- la figure 1 est un schéma illustrant le principe de fonctionnement d'une boîte de vitesses à arbres secondaires multiples et embrayages multiples selon un mode de réalisation de l'invention ;
- les figures 2 et 3 sont des vues de l'actionneur de la boîte de la figure 1 ;
- les figures 4 et 5 sont deux vues en perspective illustrant des phases successives de l'assemblage de l'actionneur à l'organe de transmission de la boîte de la figure 1 ;
- les figures 6 et 7 sont des vues analogues aux figures 2 et 3 montrant la configuration de l'actionneur une fois l'assemblage réalisé;
- les figures 8 à 10 sont des vues schématiques illustrant elles aussi des phases successives de l'assemblage de l'actionneur à l'organe de transmission de la boîte de la figure 1.

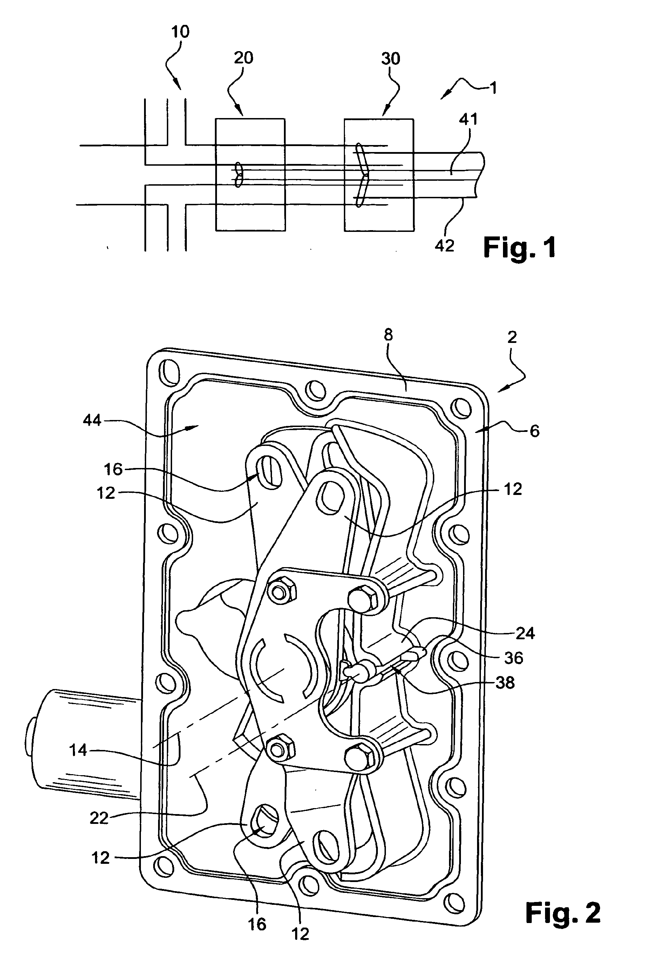

Sur la figure 1, on a représenté une boîte de vitesse 1 comprenant un double-embrayage 10, une demi-boîte de vitesses à rapports pairs 20, et une demi-boîte de vitesses à rapports impairs 30.

Le double-embrayage 10 inclut deux embrayages dont l'un est associé à la demi-boîte 20 et à un premier arbre secondaire 41, et l'autre est associe à la demi-boîte 30 et à un deuxième arbre secondaire 42.

Selon que le double embrayage 20 est actionné vers la gauche ou vers la droite, il solidarise la sortie de moteur, située à gauche de la figure, avec la demi-boîte à rapports pairs 20 ou avec la demi-boîte à rapports impairs 30.

Ainsi, alors qu'un rapport pair est engagé et embrayé, un rapport impair peut être engagé en préparation pour n'avoir plus qu'à être embrayé lorsque ce rapport devient nécessaire.

Les deux demi-boîtes 20 et 30 sont intégrées et formées chacune en l'espèce par l'actionneur 2 et l'organe de transmission 4 présentés ci-après.

L'actionneur 2 comporte un bâti 6 comprenant notamment un flasque 8 servant de support aux autres pièces. L'actionneur 2 comprend des leviers 12, ici au nombre de quatre, montés mobiles à rotation indépendamment les uns des autres autour d'un axe commun 14 par rapport au bâti 6. Chacun des leviers a une forme générale allongée et présente à son extrémité libre opposée à l'axe 14 une ouverture traversante 16 qui est en l'espèce de forme oblongue. Deux des leviers s'étendent au-dessus de l'axe 14 tandis que les deux autres s'étendent au-dessous. Les leviers ne sont pas mobiles à coulissement suivant leur axe 14. Deux des leviers sont associés à la demi-boîte 20 et servent à la sélection des rapports dans cette dernière. Les deux autres servent de même à l'autre demi-boîte 30.

L'actionneur 2 comprend des moyens de commande 17 du mouvement des leviers aptes à placer chacun des leviers dans l'une ou l'autre de deux positions prédéterminées, en fonction du rapport de vitesses choisi. Les moyens 17 sont d'un type classique et ne seront pas décrits en détail ici.

L'actionneur 2 comprend un verrou 22 formé en l'espèce par un coulisseau monté mobile à coulissement parallèlement à la direction de l'axe 14, à distance de ce dernier, dans un logement 24 du bâti 6. Le coulisseau 22 comprend un corps principal 28 de forme cylindrique à section transversale circulaire et des doigts ou dents 32, ici au nombre de trois, s'étendant en saillie du corps suivant la direction radiale.

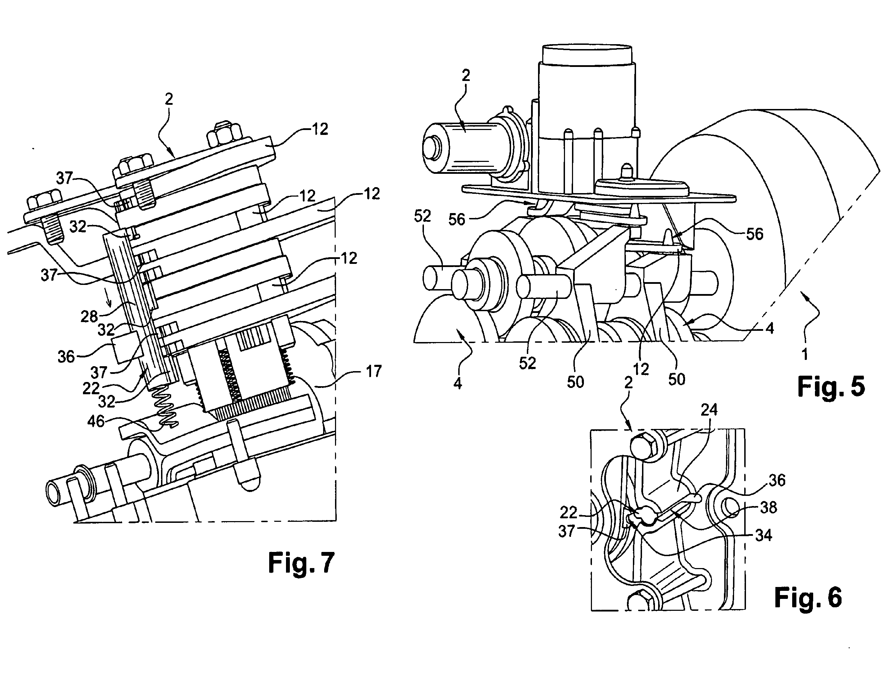

Chacun des leviers 12 présente une encoche ou découpe 34 formée par exemple dans une protubérance 37 s'étendant en saillie du corps du levier, comme illustré notamment à la figure 6.

Le verrou 22 comprend de plus un nez ou doigt d'actionnement 36 s'étendant en saillie du corps 28 d'un côté de ce dernier opposé aux dents 32 et mobile à coulissement dans une gorge traversante 38 du logement 24. L'engagement du nez 36 dans la gorge entraîne que le coulisseau n'est pas mobile en rotation dans son logement et peut seulement coulisser parallèlement à l'axe 14. Le nez 36 s'étend en saillie hors du logement à travers la gorge pour être accessible depuis l'extérieur de l'actionneur.

Le verrou 22 est mobile entre une position de verrouillage ou d'interdiction illustrée aux figures 2, 3 et 8 et une position de déverrouillage ou d'autorisation illustrée aux figures 6, 7, 9 et 10.

Dans la position de verrouillage, les dents 32 sont en prise avec les encoches 34 des leviers, ceux-ci s'étendant dans une position angulaire autour de l'axe 14 qui permet cette mise en prise. La dent médiane par rapport aux deux autres est en prise avec deux leviers 12 à la fois tandis que chacune des autres dents est en prise avec un seul levier respectif. Le verrou bloque donc la rotation des leviers autour de leur axe. De plus, le nez 36 s'étend en saillie parallèlement à la direction de l'axe 14 par rapport à la face interne 44 du flasque 8 en avant de laquelle s'étendent les leviers.

Dans la position de déverrouillage, le verrou 22 occupe une position reculée dans laquelle il traverse partiellement le flasque 8. Le nez 36 ne s'étend pas en saillie de la face 44 et s'étend intégralement de l'autre côté de cette face en ayant pénétré à travers un orifice du flasque 8. Dans cette position, les dents 32 sont dégagées des encoches respectives 34 de sorte que le mouvement des leviers n'est plus interdit par le verrou.

L'actionneur 2 comprend un ressort de rappel 46 tendant à placer ou à maintenir le verrou 22 dans la position de verrouillage. Il s'agit en l'espèce d'un ressort de compression interposé entre une extrémité axiale interne du verrou et un appui adapté non illustré du bâti.

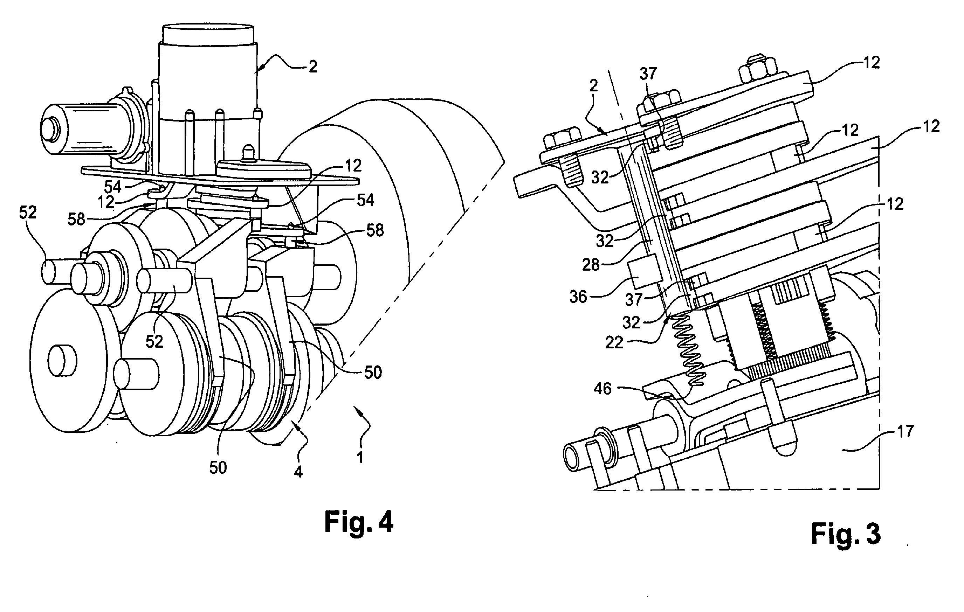

L'organe de transmission 4 comprend quatre fourches de synchronisation 50 montées rotatives et coulissantes deux à deux sur deux tiges 52. Les fourches permettent d'actionner d'autres pièces de l'organe de transmission 4 pour obtenir le rapport de vitesses choisi. Chaque fourche 50 comprend un bras de liaison 54 présentant une extrémité libre de forme générale tronconique 56 illustrée à la figure 5, suivie du côté du plus grand diamètre du cône, par un tronçon cylindrique 58 visible notamment à la figure 4. Les extrémités libres 54 sont disposées pour pénétrer dans les ouvertures 16 des leviers.

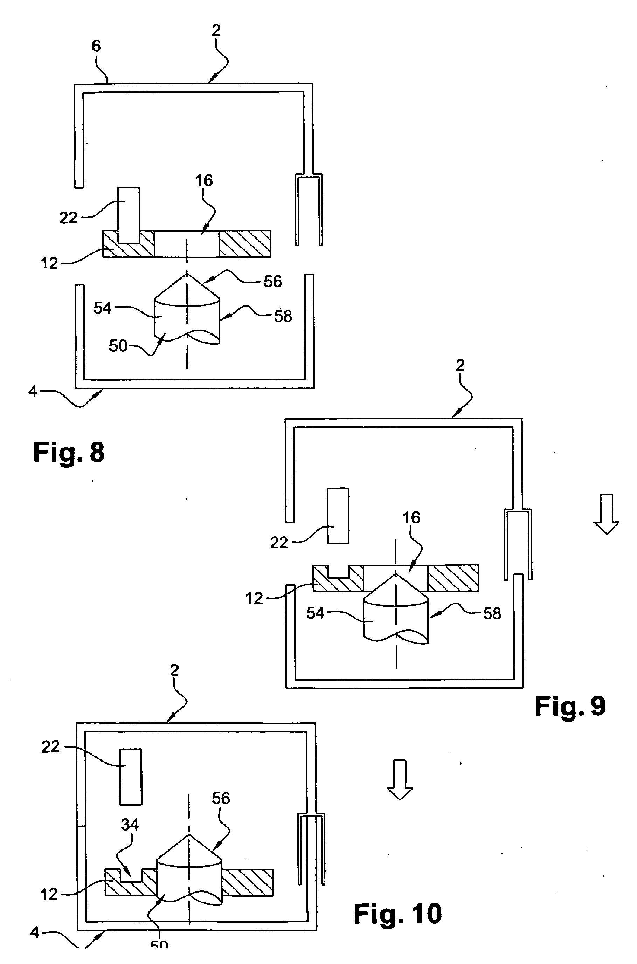

On effectue l'assemblage de la boîte de vitesses comme suit. On se référera notamment aux figures 8, 9 et 10 qui illustrent certaines étapes de cet assemblage de façon schématique.

L'actionneur 2 se trouve initialement est séparé de l'organe de transmission et dans la configuration des figures 2, 3 et 8 avec le verrou 22 en position de verrouillage qui interdit donc tout mouvement des leviers 12 par rapport au bâti. Les leviers se trouvent dans la position qui leur permettra d'être reliés aux extrémités libres des fourches respectives. Les fourches 50 avec leurs bras 54 ne sont toujours pas en contact avec les leviers et sont à distance des ouvertures 16.

On approche l'actionneur 2 de l'organe de transmission 4 en présentant la face 44 en direction de l'organe de transmission afin de mettre en correspondance les extrémités libres 56 avec les ouvertures 16.

On arrive ensuite à la phase d'assemblage illustrée à la figure 4 dans laquelle les extrémités 56 des bras de liaison pénètrent dans les ouvertures respectives 16. Cette pénétration est facilitée le centrage procuré par la forme tronconique de l'extrémité des bras. L'actionneur 2 est ainsi prépositionné par rapport à l'organe de transmission. Le verrou 22 se trouve encore à ce moment en position de verrouillage. Une pièce de l'organe de transmission, par exemple de son bâti, est toutefois en contact avec la face avant du nez 36.

Après cette étape de pré-positionnement, on continue à approcher l'actionneur 2 et l'organe de transmission 4, ce qui a pour effet de faire passer le verrou 22 de la position de verrouillage à la position de déverrouillage. C'est la situation de la figure 9. Les leviers ne sont donc plus immobilisés par le verrou.

On poursuit le positionnement de l'actionneur 2 par rapport à l'organe de transmission 4 en les fixant l'un à l'autre au moyen d'organes tels que des vis. Cette fixation, notamment le serrage des vis, provoque un déplacement supplémentaire de l'actionneur 2 par rapport à l'organe de transmission jusqu'à lui faire atteindre sa position finale. Au cours de ce déplacement dont la fin est illustrée aux figures 6, 7 et 10, les bras de liaison 54 pénètrent davantage dans les ouvertures 16 qui viennent cette fois en appui sur les tronçons cylindriques 58 des bras, réduisant ainsi le jeu radial entre les leviers et les fourches. De plus, au cours de ce mouvement, l'organe de transmission sollicite encore le nez 36 et déplace encore le verrou 22 pour le faire reculer davantage.

Les leviers se trouvent libérés et peuvent être commandés pour prendre chacun telle ou telle position et déplacer les fourches correspondantes. Sachant que l'organe de transmission 4 maintient son appui sur le verrou à l'encontre du ressort 46, ce dernier ne peut pas replacer le verrou en position de verrouillage.

Le verrouillage temporaire des leviers permet de les maintenir en position au cours du montage. On prévoit de préférence que c'est lors de la mise en contact des boitiers respectifs de l'actionneur 2 et de l'organe de transmission 4 que les bras 54 pénètrent dans les ouvertures 16, et que c'est seulement une fois que cette pénétration a commencé que le verrou libère les leviers. Ainsi le déverrouillage n'a lieu qu'une fois que les fourches ont convenablement pénétré dans les leviers de sorte que la liaison entre ces pièces se trouve assurée. Il n'est pas nécessaire de prévoir un jeu excessif entre les fourches et les leviers.

L'invention ne nécessite pas de retenir en position les leviers au moyen d'une pièce à ôter durant l'assemblage. Elle ne requiert pas l'emploi d'outils ou de procédures spéciales pour réaliser l'assemblage. L'invention facilite donc la fabrication.

Bien entendu, on pourra apporter à l'invention de nombreuses modifications sans sortir du cadre des revendications.

On pourrait prévoir que les cavités sont portées par le verrou et les reliefs par les leviers.

## Revendications

1. Ensemble pour une boîte de vitesses (1) à arbres secondaires multiples (41, 42) et embrayages multiples, comprenant un organe de transmission (4) comprenant des fourches de synchronisation (50) et un actionneur (2) comprenant des leviers (12) et un verrou (22), **caractérisé en ce que** le verrou (22) est apte à être déplacé par l'organe de transmission (4), lorsqu'on l'assemble à l'actionneur, pour passer d'une position dans laquelle le verrou interdit un mouvement des leviers à une position dans laquelle il l'autoriselesdites fourches (50) étant aptes à venir en prise avec les leviers (12) respectifs lors de l'assemblage, de préférence avant le déplacement du verrou.

2. Ensemble selon la revendication précédente dans lequel le verrou (22) étant monté mobile sur un bâti de l'actionneur (2) est monté mobile à coulissement par rapport audit bâti suivant une direction parallèle à un axe de rotation (14) des leviers (12).

3. Ensemble selon au moins l'une quelconque des revendications précédentes dans lequel le verrou (22) et les leviers (12) comprennent des reliefs (32) et des cavités (34) aptes à venir en prise mutuelle.

4. Ensemble selon la revendication précédente, **caractérisé en ce que** le verrou comprend les cavités (34) et les leviers comprennent les reliefs (34).

5. Ensemble selon au moins l'une quelconque des revendications précédentes dans lequel le verrou (22) comprend un relief (36) accessible depuis l'extérieur de l'actionneur pour faire passer le verrou de la position d'interdiction à la position d'autorisation.

6. Ensemble selon au moins l'une quelconque des revendications précédentes qui comprend un ressort (46) de rappel du verrou dans la position d'interdiction.

7. Ensemble selon l'une quelconque des revendications précédentes, dans lequel les fourches comportent un bras de liaison (54) apte à pénétrer dans une ouverture (16) des leviers.

8. Ensemble selon la revendication précédente dans lequel le bras (54) présente une extrémité (56) de forme tronconique.

9. Ensemble selon la revendication précédente dans lequel le bras (54) présente une zone (58) de forme cylindrique au-delà de l'extrémité.

10. Boîte de vitesses (1) à arbres secondaires multiples (41, 42) et embrayages multiples, **caractérisée en ce qu'**elle comprend un ensemble selon l'une quelconque des revendications précédentes.

11. Procédé d'assemblage d'une boîte de vitesses (1) à arbres secondaires multiples (41, 42) et embrayages multiples selon la revendication précédente, **caractérisé en ce qu'**on assemble l'actionneur (2) et l'organe de transmission (4) de sorte que, durant l'assemblage, l'organe de transmission déplace le verrou d'une position où il interdit un mouvement des leviers (12) de l'actionneur (2) jusqu'à une position où il l'autorise.

## Patentansprüche

1. Anordnung für ein Getriebe (1) mit mehreren Sekundärwellen (41, 42) und mehreren Kupplungen, die ein Übertragungsglied (4) umfasst, das Synchronisationsgabeln (50) und einen Aktuator (2) umfasst, der Hebel (12) und eine Sperrvorrichtung (22) umfasst, **dadurch gekennzeichnet, dass** die Sperrvorrichtung (22) durch das Übertragungsglied (4) verschoben werden kann, wenn es an den Aktuator montiert wird, um aus einer Stellung, in der die Sperrvorrichtung eine Bewegung der Hebel blockiert, in eine Stellung zu gelangen, in der die Sperrvorrichtung die Bewegung freigibt, wobei die Gabeln (50) bei der Montage mit den entsprechenden Hebeln (12) in Eingriff kommen können, vorzugsweise vor der Verschiebung der Sperrvorrichtung.

2. Anordnung nach dem vorhergehenden Anspruch, wobei die an einem Gehäuse des Aktuators (2) beweglich befestigte Sperrvorrichtung (22) bezüglich des Gehäuses in einer zu einer Drehachse (14) der Hebel (12) parallelen Richtung gleitbeweglich befestigt ist.

3. Anordnung nach mindestens einem der vorhergehenden Ansprüche, wobei die Sperrvorrichtung (22) und die Hebel (12) Vorsprünge (32) und Vertiefungen (34) umfassen, die miteinander in Eingriff gelangen können.

4. Anordnung nach dem vorhergehenden Anspruch, **dadurch gekennzeichnet, dass** die Sperrvorrichtung die Vertiefungen (34) umfasst und die Hebel die Vorsprünge (32) umfassen.

5. Anordnung nach mindestens einem der vorhergehenden Ansprüche, wobei die Sperrvorrichtung (22) einen Vorsprung (36) umfasst, der von außerhalb des Aktuators zugänglich ist, um die Sperrvorrichtung aus der Blockierstellung in die Freigabestellung zu bringen.

6. Anordnung nach mindestens einem der vorhergehenden Ansprüche, die eine Feder (46) zum Rückholen der Sperrvorrichtung in die Blockierstellung umfasst.

7. Anordnung nach einem der vorhergehenden Ansprüche, wobei die Gabeln einen Verbindungsarm (54) umfassen, der in eine Öffnung (16) der Hebel eintreten kann.

8. Anordnung nach dem vorhergehenden Anspruch, wobei der Arm (54) ein kegelstumpfförmiges Ende (56) aufweist.

9. Anordnung nach dem vorhergehenden Anspruch, wobei der Arm (54) hinter dem Ende einen zylindrischen Abschnitt (58) aufweist.

10. Getriebe (1) mit mehreren Sekundärwellen (41, 42) und mehreren Kupplungen, **dadurch gekennzeichnet, dass** es eine Anordnung nach einem der vorhergehenden Ansprüche umfasst.

11. Montageverfahren für ein Getriebe (1) mit mehreren Sekundärwellen (41, 42) und mehreren Kupplungen nach dem vorhergehenden Anspruch, **dadurch gekennzeichnet, dass** der Aktuator (2) und das Übertragungsglied (4) so montiert werden, dass das Übertragungsglied die Sperrvorrichtung während der Montage aus einer Stellung, in der sie eine Bewegung der Hebel (12) des Aktuators (2) blockiert, bis zu einer Stellung verschiebt, in der sie die Bewegung freigibt.

## Claims

1. Assembly for a gearbox (1) with multiple secondary shafts (41, 42) and multiple clutches, comprising a transmission member (4) comprising synchronization forks (50) and an actuator (2) comprising levers (12) and a catch (22), **characterized in that** the catch (22) is able to be moved by the transmission member (4) when it is being assembled with the actuator, so that it shifts from a position in which the catch disables any movement of the levers into a position in which it enables same, said forks (50) being able to come into mesh with the respective levers (12) upon assembly, preferably before the catch is moved.

2. Assembly according to the preceding claim, in which the catch (22), being mounted able to move on a supporting structure (2), is mounted able to move in a sliding manner with respect to the supporting structure in a direction parallel to an axis of rotation (14) of the levers (12).

3. Assembly according to at least either one of the preceding claims, in which the catch (22) and the levers (12) comprise reliefs (32) and cavities (34) which are able to come into mesh with one another.

4. Assembly according to the preceding claim, **characterized in that** the catch comprises the cavities (34) and the levers comprise the reliefs (32).

5. Assembly according to at least any one of the preceding claims, in which the catch (22) comprises a relief (36) accessible from outside the actuator to cause the catch to shift from the disabling position into the enabling position.

6. Assembly according to at least any one of the preceding claims, which comprises a return spring (46) that returns the catch to the disabling position.

7. Assembly according to any one of the preceding claims, in which the forks comprise a connecting arm (54) able to penetrate an opening (16) in the levers.

8. Assembly according to the preceding claim, in which the arm (54) has an end (56) of frustoconical shape.

9. Assembly according to the preceding claim, in which the arm (54) has a region (58) of cylindrical shape beyond the end.

10. Gearbox (1) with multiple secondary shafts (41, 42) and multiple clutches, **characterized in that** it comprises an assembly according to any one of the preceding claims.

11. Method of assembling a gearbox (1) with multiple secondary shafts (41, 42) and multiple clutches according to the preceding claim, **characterized in that** the actuator (2) and the transmission member (4) are assembled in such a way that during assembly the transition member moves the catch from a position in which it disables any movement of the levers (12) of the actuator (2) into a position in which it enables same.
